(19) Europäisches Patentamt
European Patent Office
Office européen des brevets

(11) **EP 2 209 664 B1**

(12) **FASCICULE DE BREVET EUROPEEN**

(45) Date de publication et mention de la délivrance du brevet:
**17.04.2019 Bulletin 2019/16**

(21) Numéro de dépôt: **08850899.9**

(22) Date de dépôt: **12.11.2008**

(51) Int Cl.:
*B60T 1/10* (2006.01)  *B60W 20/00* (2016.01)
*B60W 30/18* (2012.01)  *B60L 7/26* (2006.01)
*B60L 7/18* (2006.01)  *B60W 10/08* (2006.01)
*B60W 10/184* (2012.01)

(86) Numéro de dépôt international:
**PCT/EP2008/065418**

(87) Numéro de publication internationale:
**WO 2009/062976 (22.05.2009 Gazette 2009/21)**

(54) **PROCEDE DE CONTROLE DU FREINAGE RECUPERATIF D'UN VEHICULE COMPRENANT AU MOINS UN MOTEUR ELECTRIQUE**

VERFAHREN ZU STEUERUNG DER REGENERATIVEN BREMSUNG EINES FAHRZEUGES MIT MINDESTENS EINEM ELEKTROMOTOR

METHOD FOR CONTROLLING THE REGENERATIVE BRAKING OF A VEHICLE INCLUDING AT LEAST ONE ELECTRIC MOTOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **14.11.2007 FR 0759028**

(43) Date de publication de la demande:
**28.07.2010 Bulletin 2010/30**

(73) Titulaire: **Renault S.A.S.**
**92100 Boulogne-Billancourt (FR)**

(72) Inventeur: **VESPASIEN, Jean-Marie**
**F-94600 Choisy-le-Roi (FR)**

(74) Mandataire: **Rougemont, Bernard et al**
**Renault s.a.s**
**Technocentre**
**Sce 00267 TCR GRA 2 36**
**1, Avenue du Golf**
**78288 Guyancourt (FR)**

(56) Documents cités:
| | |
|---|---|
| **EP-A- 1 136 310** | **JP-A- 2001 145 205** |
| **US-A- 6 120 115** | **US-A1- 2007 228 821** |
| **US-B1- 6 459 980** | |

**Description**

La présente invention se rapporte au contrôle du freinage récupératif sur un véhicule automobile.

Plus précisément, elle a pour objet un procédé de contrôle de freinage récupératif d'un véhicule équipé d'un moteur thermique et/ou d'au moins un moteur électrique.

Cette invention trouve application sur tout véhicule automobile équipé d'au moins un moteur électrique et de moyens de stockage associés, notamment des batteries, qu'il s'agisse d'un véhicule strictement électrique, ou d'un véhicule hybride, comportant un moteur thermique associé à au moins une machine électrique.

La fonction de freinage récupératif est généralement découplée de la pédale de frein du véhicule. Dans ce cas, le système de contrôle du groupe motopropulseur (GMP) contrôle l'effort de freinage appliqué aux roues par les plaquettes de frein, en vue d'optimiser la récupération d'énergie. Ainsi, lorsque le conducteur enfonce la pédale de frein, le contrôle GMP peut aller jusqu'à annuler l'effort à appliquer via les plaquettes (pas de dissipation d'énergie cinétique) pour maximiser la récupération par le(s) moteur(s) électrique (s) .

La publication FR 2 230 515 décrit un tel système, selon lequel le niveau de freinage récupératif est lié au degré d'enfoncement de la pédale de frein. Plus précisément, c'est l'intensité du courant assurant le freinage récupératif qui dépend directement de la position de la pédale de frein, sans prendre en compte l'état du véhicule (vitesse, état de charge batterie, etc.). Or, il peut être souhaitable de moduler le courant de recharge dans certaines circonstances, notamment lorsque la batterie est déjà à un niveau élevé de charge, pour éviter de la détériorer.

La publication US20020030408 décrit un autre procédé de contrôle du freinage récupératif de véhicule, modulé en fonction de la demande de freinage du conducteur, et d'un ratio de balance entre trains avant et arrière. Le système de freinage conventionnel est toutefois découplé de ce contrôle, ce qui augmente le coût du système. De plus, le calcul de la consigne de freinage récupératif ne tient pas compte du frein moteur assurant la décélération du véhicule en levé de pied, ce qui peut conduire à des discontinuités dans la décélération, quand on passe d'une phase de freinage à une phase de levé de pied. Dans ces conditions, l'agrément de conduite peut en pâtir.

En résumé, les procédés connus ne parviennent pas à optimiser la gestion de l'énergie électrique sur le véhicule, donc de minimiser la consommation de carburant, dans le cas d'un véhicule hybride, ou de maximiser, l'autonomie de roulage dans le cas des véhicules électriques.

Les documents : JP2001145205 , EP1136310, US 2007/228821, US 6120115 et US6459980 font partie de l'état antérieur de la présente demande.

La présente invention vise à prendre en compte le freinage récupératif dans le calcul du point de fonctionnement du groupe motopropulseur dans son ensemble, de manière à minimiser les pertes énergétiques liées au freinage.

Dans ce but, elle propose de calculer une consigne de force de freinage du GMP aux roues, incluant un effort de freinage récupératif, qui soit indépendante de la relation existant entre l'enfoncement de la pédale de frein et l'effort de freinage appliqué aux roues par les freins principaux du véhicule.

Conformément à l'invention, l'effort de freinage supplémentaire fourni par les moteurs électriques comme freinage récupératif, vient simplement s'ajouter à l'effort de freinage appliqué par les freins principaux du véhicule.

Selon un mode de réalisation particulier de l'invention, la consigne de freinage du GMP à la roue (Fr_cons_brake), est définie par une relation telle que :

$$\text{Fr\_cons\_brake} = \text{Fr\_min\_0} + \beta(\text{brake\_pdl}) * (\text{Fr\_min\_1} - \text{Fr\_min\_0}),$$

où :

- $\beta$ est une fonction de la position de la pédale de frein, définie par exemple de l'intervalle [0 ;100] vers l'intervalle [0 ; 1] calibrée afin de saturer au niveau 1 à partir d'une position intermédiaire de la pédale, de manière à disposer de la totalité du freinage récupératif autorisé, au-delà d'un certain enfoncement de la pédale de frein.
- Fr_min_0 est l'effort minimal que l'on peut requérir du GMP en levé de pied, et
- Fr_min_1 est le niveau maximal en valeur absolue de freinage récupératif.

Grâce à ces mesures, on rajoute à cet effort de freinage par dissipation une effort de freinage récupératif, par les machines électriques : si le véhicule décélère trop, le conducteur soulage la pédale de frein, et sollicite moins le système de freinage par dissipation.

D'autres caractéristiques et avantages de la présente invention apparaîtront clairement à la lecture de la description suivante d'un mode de réalisation non limitatif de celle-ci, en se reportant aux dessins annexés, sur lesquels :

- la figure 1 présente, à titre d'exemple, une architecture de contrôle pour un véhicule hybride comprenant un moteur thermique, et au moins un moteur électrique,
- la figure 2 montre les enveloppes minimale et maximale d'effort,
- la figure 3 illustre la calibration du freinage récupératif,
- la figure 4 complète cette illustration,
- la figure 5 met en évidence la superposition des efforts de freinage par dissipation et récupératif, et
- la figure 6 illustre une variante de l'invention.

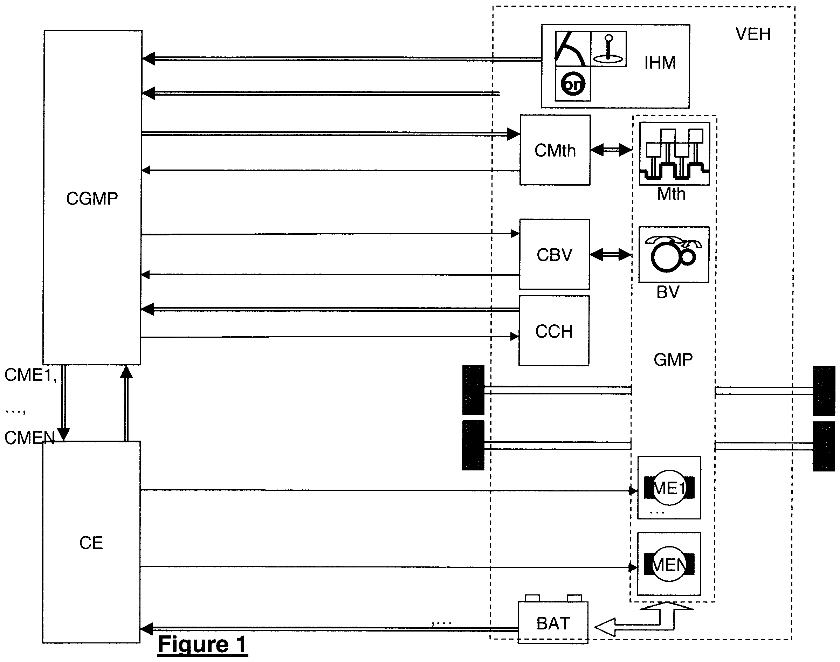

Sur l'ensemble des figures, il a été choisi arbitrairement de décrire une architecture de contrôle définie dans un référentiel force aux roues / vitesse véhicule. Cette représentation vise à faire ressortir l'ensemble des contributions motrices aux roues du véhicule. La notion de force aux roues, est équivalente à celle de couple aux roues. La figure 1 fait apparaître :

- un calculateur de contrôle du groupe motopropulseur (CGMP) qui se charge principalement de l'élaboration des consignes à destination des actionneurs : le moteur thermique (Mth), la boîte de vitesses (BV), le châssis, etc.,
- un calculateur de contrôle électrotechnique (CE) qui se charge de piloter l'ensemble du système électrotechnique (batterie (BAT), onduleurs, moteur(s) électrique (s) (ME1 à MEN, de manière à réaliser les consignes reçues du CGMP,

- un calculateur de contrôle du moteur thermique (CMth) qui se charge de piloter sur le moteur (Mth) l'ensemble des éléments nécessaires à la réalisation de la consigne émanant du CGMP,
- un calculateur de contrôle de la boîte de vitesse (CBV) qui se charge de piloter les actionneurs de la boîte (BV), permettant de réaliser les consignes du CGMP, et
- un calculateur de contrôle du châssis (CCH) qui se charge de piloter la réalisation des consignes venant du CGMP.

Le calculateur de contrôle GMP se charge d'interpréter les actions du conducteur en consignes intelligibles pour les actionneurs. Dans le cas général, on traduit la position de la pédale d'accélération, en une consigne GMP d'effort moteur Fr_cons, selon la relation :

$$\mathbf{Fr\_cons = Fr\_min\_0 + \alpha(accel\_pdl)*(Fr\_max - Fr\_min\_0),}$$

où :

- Fr_min_0 : correspond à l'enveloppe des efforts minimaux que l'on peut requérir du GMP
- Fr_max : correspond à l'enveloppe maximale des efforts que l'on peut requérir du GMP.
- $\alpha$ est une fonction de la pédale d'accélération, définie de l'intervalle [0 ; 100] vers l'intervalle [0 ; 1], permet par exemple de calibrer une progressivité dans la traduction de la pédale d'accélération.

Pour un véhicule électrique (sans moteur thermique), l'enveloppe Fr_min_0, qui caractérise le profil de décélération naturelle (c'est-à-dire en levé de pied) du véhicule, peut se calibrer en tenant compte des contraintes du système électrotechnique (limites de puissance batterie, couple minimal que peut fournir le moteur électrique, etc.)

Avec un véhicule hybride (avec moteur thermique), la situation est différente, étant donné que la décélération naturelle peut intervenir avec le moteur thermique tournant (par exemple quand la batterie est en pleine charge) ou non (c'est alors le moteur électrique qui assure le frein moteur). Pour garantir au conducteur une décélération identique lorsque le moteur thermique tourne, ou lorsqu'il est coupé, on peut choisir de définir l'enveloppe Fr_min_0 au plus proche du frein moteur thermique. Lors d'une décélération, moteur thermique coupé, le moteur électrique aura alors à charge, de reproduire le niveau de frein moteur du moteur thermique.

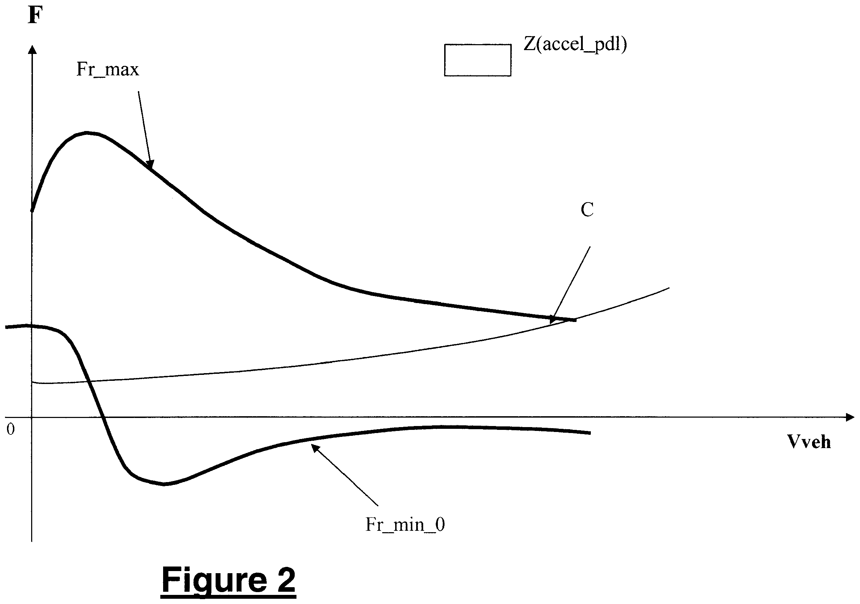

Sur la figure 2, on a représenté, dans un repère vitesse véhicule (Vveh) / Force aux roues (F), une courbe Fr_max (enveloppe maximale des efforts requis du GMP), et une courbe Fr-min_0 (enveloppe minimale en pied levé). Ces deux courbes délimitent sur le repère une zone de variation de la consigne GMP sur appui de la pédale d'accélération, Z(accel_pdl). La courbe de résistance à l'avancement (C) du véhicule dans des conditions nominales (sol plat, absence de vent, etc.), vient croiser l'enveloppe maximale Fr_max, à l'extrémité de la zone de variation de consigne.

Sur la même base de calcul que la consigne GMP en traction (Fr_cons), l'invention prévoit d'introduire un calcul de la consigne GMP en freinage (Fr_cons_brake), selon la relation :

$$\texttt{Fr\_cons\_brake = Fr\_min\_0 +} \; \beta \texttt{(brake\_pdl)*(Fr\_min\_1 -}$$

$$\texttt{Fr\_min\_0),}$$

où :

- β est une fonction de la position de la pédale de frein, définie par exemple de l'intervalle [0 ;100] vers l'intervalle [0 ; 1] ; cette fonction permet de calibrer le niveau de freinage récupératif souhaité, pour une position pédale de frein donnée, et
- Fr_min_1 correspond au niveau maximal (en valeur absolue) de freinage récupératif que l'on souhaite donner au véhicule.

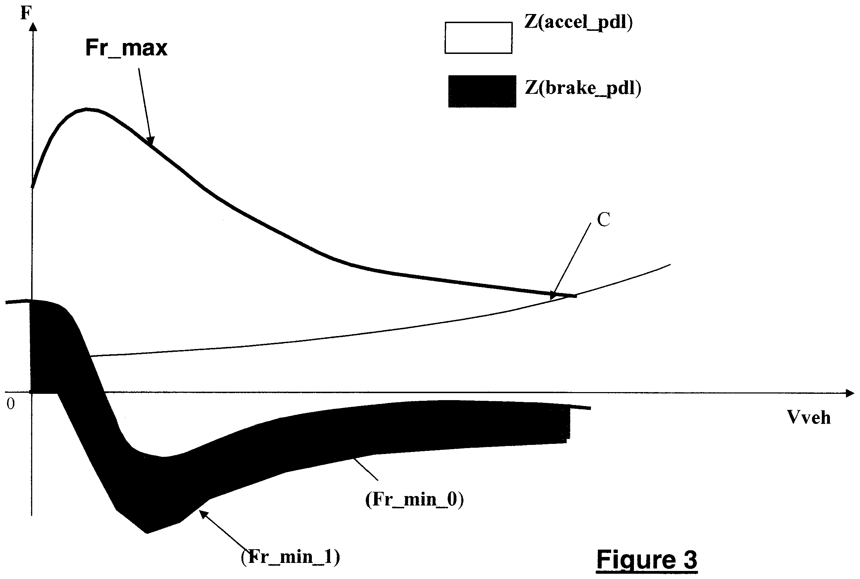

La figure 3 illustre un autre aspect de l'invention, qui concerne la calibration du niveau maximal de freinage récupératif (Fr_min_1). Sur la même courbe que la figure 2, apparaît en plus l'enveloppe maximale de freinage récupératif (Fr_min_1), qui définit avec la courbe d'enveloppe minimale en pied levé (Fr_min_0), une zone de variation de la consigne GMP sur appui de la pédale de frein (brake-pdl). Etant donné que le freinage récupératif ne peut intervenir que si l'état du système électrotechnique du véhicule le permet (en particulier, en l'absence de défaillance, et lorsque la charge batterie n'est pas saturée), on limite le niveau de freinage récupératif à un niveau tel que sa suppression serait acceptable pour le conducteur. Cette disposition permet que ce dernier n'ait pas l'impression d'avoir un freinage défaillant, en l'absence de freinage récupératif.

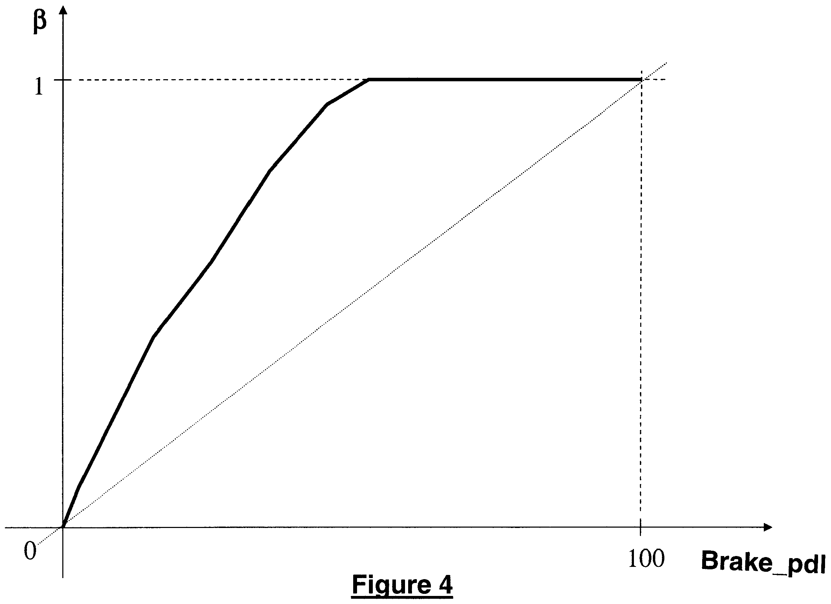

La figure 4 illustre un exemple de calibration de la fonction de position de pédale de frein β = f(brake_pdl). Cette calibration sature la fonction β au niveau 1, à partir d'une position intermédiaire de la pédale de frein. Elle permet de disposer de la totalité du freinage récupératif autorisé, au-delà d'un certain enfoncement de la pédale de frein.

Dans le cas général, c'est-à-dire en tenant compte des demandes d'accélération ou de freinage sur les pédales correspondantes (accel_pdl, brake_pdl), il est ainsi possible de calculer alors la consigne GMP de force aux roues Fr_cons fonction de la position de la pédale d'accélération et de freinage, comme suit :

$$\texttt{Fr\_cons (accel\_pdl, brake\_pdl) = Fr\_min\_0 +}$$

$$\alpha \texttt{(accel\_pdl)*(Fr\_max - Fr\_min\_0) +}$$

$$\beta \texttt{(brake\_pdl)*(Fr\_min\_1 - Fr\_min\_0)}$$

Une fois calculée, cette consigne est toutefois traitée, avant d'être appliquée, dans un second module qui la sature (éventuellement) en tenant compte des contraintes électrotechniques (niveau de charge batterie, etc.) et de contraintes châssis visant à garantir la stabilité du véhicule en toutes circonstances.

La consigne de force aux roues ainsi calculée inclut l'effort de freinage récupératif, mais ne modifie pas la relation entre l'enfoncement de la pédale de frein et l'effort de freinage appliqué aux roues par le système de freinage principal. Par exemple, dans le cas d'un système de freinage hydraulique, cette stratégie permet de conserver une relation fixe entre la position de la pédale de frein et la pression exercée par le maître cylindre.

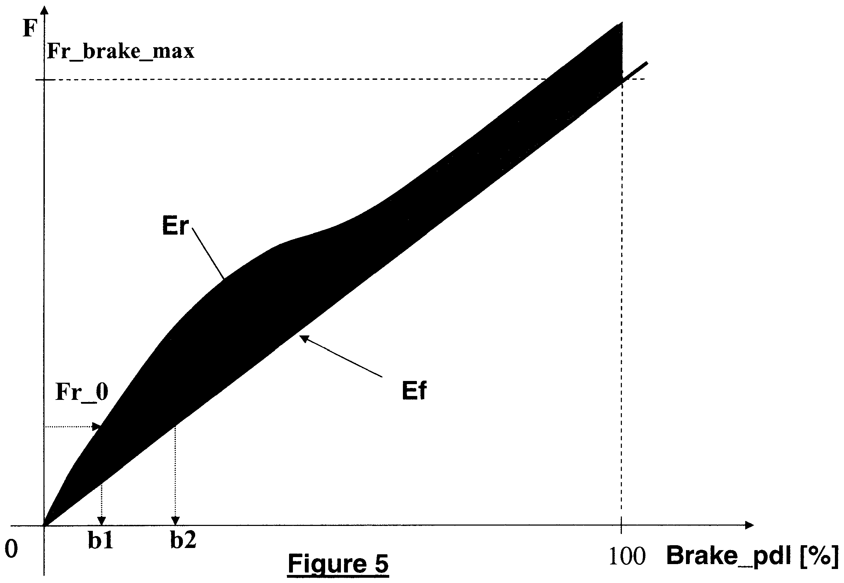

Comme montré sur la figure 5, qui présente la relation entre la force de freinage F et la position de la pédale de frein (Brake_pdl), l'effort de freinage récupératif (Er), vient simplement s'ajouter à l'effort de freinage conventionnel (Ec) appliqué par les freins principaux du véhicule. Sur cette figure, on suppose une relation affine à une vitesse donnée du véhicule, entre la position de la pédale de frein brake_pdl et l'effort de freinage appliqué par les freins. Ainsi, tant que le freinage récupératif est possible, on sollicite moins les freins. En effet, si à un moment donné, le conducteur souhaite disposer d'un freinage d'amplitude Fr_0 (voir fig. 5), cela correspondra à un enfoncement de la pédale de frein jusqu'à la position b1 (avec freinage récupératif), alors qu'il devrait enfoncer la même pédale jusqu'à la position b2 > b1 sans freinage récupératif. C'est donc le conducteur qui assure la régulation de l'effort de freinage au niveau désiré.

Les avantages de l'invention sont nombreux. Elle permet notamment :

- une meilleure récupération d'énergie en freinage, pour un GMP hybride non équipé d'un système de freinage découplé,
- une gestion du freinage récupératif pratiquement transparente pour le conducteur qui disposera d'un niveau de freinage sensiblement constant quel que soit le mode de fonctionnement retenu (thermique, hybride ou électrique),
- une moindre sollicitation du système de freinage conventionnel pour une même demande de décélération, favorisant la durabilité de ce système,

- la mise en place une fonction de freinage récupératif, sans avoir à supporter le surcoût d'un système de freinage découplé,
- une meilleure recharge des batteries en décélération (pour un système ne disposant pas de freinage découplé), tout en réduisant l'utilisation des freins.

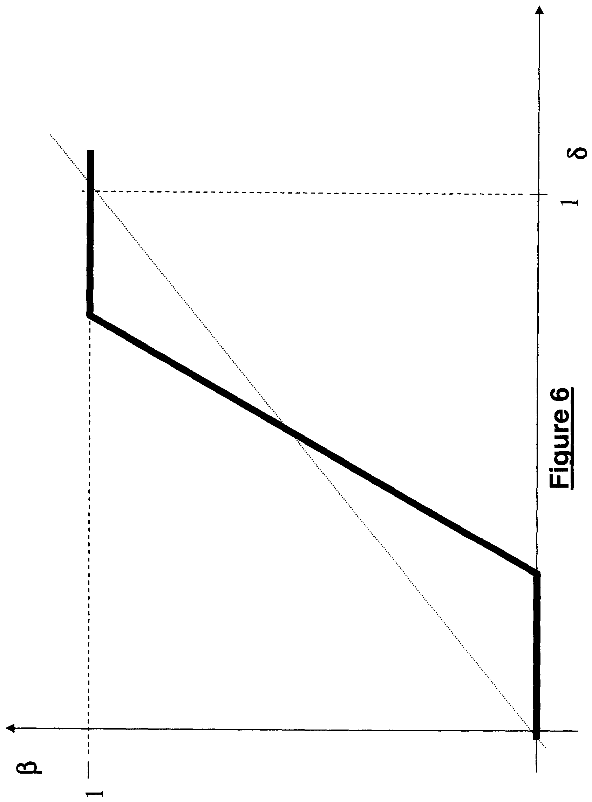

Outre ces avantages principaux, l'invention permet d'introduire facilement une fonction « pre-crash braking », consistant à détecter une situation de freinage d'urgence de manière à permettre un freinage immédiat, avant même d'enfoncer la pédale de frein. Pour cela, il suffit de construire le paramètre β [= f (brake_pdl)], en fonction d'un indicateur de freinage d'urgence, δ compris entre 0 (pas d'urgence) et 1, (freinage d'urgence imminent) comme indiqué sur la figure 6.

Le paramètre β peut être fonction à la fois de la position pédale de frein et de l'indicateur de freinage d'urgence, de manière à assurer une continuité dans le freinage récupératif. Cette anticipation permet de réduire la distance d'arrêt du véhicule tout en stockant de l'énergie.

En conclusion, il faut souligner que les systèmes de freinage récupératif découplés, connus de l'art antérieur sont dans tous les cas plus onéreux que la solution proposée par l'invention. Celle-ci est mise en oeuvre sans modifier la loi qui lie la position pédale de frein à l'effort de freinage assuré par les plaquettes de frein, qui répond pour sa part, à un impératif de sécurité.

Grâce à l'invention, on peut appliquer un niveau de freinage récupératif aussi important que possible, dans la limite de ce que tolérerait instantanément le conducteur. De plus, il n'est plus nécessaire de modifier la consigne de freinage conventionnel liée à chaque position de la pédale de frein. La présente invention est donc applicable sur un véhicule équipé par ailleurs de tout type de freinage.

L'invention permet de récupérer une partie de l'énergie cinétique dissipée en phase de freinage, sans aucun surcoût lié à l'introduction d'un système de freinage découplé.

Enfin, comme indiqué plus haut, le freinage récupératif est désormais complètement transparent pour le conducteur, puisque la consigne de freinage récupératif ne prend en compte que l'agrément de conduite, avec une parfaite continuité de freinage entre toutes les situations de roulage rencontrées.


**Revendications**

1.  Procédé de contrôle de freinage récupératif d'un véhicule équipé d'un moteur thermique et d'au moins un moteur électrique ou d'au moins un moteur électrique, dans lequel on calcule une consigne de force de freinage du groupe motopropulseur à la roue incluant un effort de freinage récupératif, qui est indépendante de la relation existant entre l'enfoncement de la pédale de frein et l'effort de freinage appliqué aux roues par les freins principaux du véhicule, dans lequel la consigne de freinage du groupe motopropulseur à la roue (Fr_cons_brake), est définie par la relation :

$$Fr\_cons\_brake = Fr\_min\_0 + \beta(brake\_pdl)*(Fr\_min\_1 - Fr\_min\_0),$$

où :

- Fr_min_0 est l'effort minimal que l'on peut requérir du groupe motopropulseur en levé de pied
- *Fr_min_1 est le niveau maximal en valeur absolue de freinage récupératif,* et
- β est une fonction de la position de la pédale de frein, définie de l'intervalle [0 ; 100] vers l'intervalle [0 ; 1],

**caractérisé en ce que** :
la fonction est calibrée afin de saturer au niveau 1 à partir d'une position intermédiaire de la pédale, de manière à disposer de la totalité du freinage récupératif autorisé, au-delà d'un certain enfoncement de la pédale de frein.

2.  Procédé de contrôle de freinage récupératif selon la revendication 1, **caractérisé en ce que** l'effort de freinage supplémentaire fourni par les moteurs électriques comme freinage récupératif, vient simplement s'ajouter à l'effort de freinage appliqué par les freins principaux du véhicule.

3.  Procédé de contrôle de freinage récupératif selon la revendication 1 ou 2, **caractérisé en ce que** l'effort minimal (Fr_min_0) est défini au plus proche du frein moteur thermique.

4.  Procédé de contrôle de freinage récupératif selon la revendication 1, 2 ou 3, **caractérisé en ce que** le niveau maximal du freinage récupératif (Fr_min_1) est limité à un niveau tel que le conducteur n'ait pas l'impression d'avoir un freinage défaillant en son absence.

5. Procédé de contrôle de freinage récupératif selon l'une des revendications précédentes, **caractérisé en ce qu'**on calcule une consigne groupe motopropulseur de force aux roues Fr_cons (accel_pdl, brake_pdl), en fonction de la position de pédale d'accélérateur et de freinage ou de freinage selon une relation du type :

$$\texttt{Fr\_cons (accel\_ pdl, brake\_pdl) = Fr\_min\_0 +}$$
$$\alpha\texttt{(accel\_pdl)*(Fr\_max - Fr\_min\_0) +}$$
$$\beta\texttt{(brake\_pdl)*(Fr\_min\_1 - Fr\_min\_0)}$$

où :

- Fr_max correspond à l'enveloppe maximale des efforts que l'on peut requérir du groupe motopropulseur,
- $\alpha$ est une fonction de la pédale d'accélération, définie de l'intervalle [0 ; 100] vers l'intervalle [0 ; 1],

*le paramètre* $\beta$(brake_pdl), est fonction d'un indicateur de freinage d'urgence ($\delta$) compris entre 0 et 1.

6. Procédé de contrôle de freinage récupératif selon la revendication 5, **caractérisé en ce que** le paramètre $\beta$(brake_pdl) est fonction à la fois de la position pédale de frein (brake_pdl) et de l'indicateur de freinage d'urgence ($\delta$).

**Patentansprüche**

1. Verfahren zur Steuerung einer regenerativen Bremsung eines Fahrzeugs, das mit einem Verbrennungsmotor und mindestens einem Elektromotor oder mindestens einem Elektromotor ausgestattet ist, bei dem ein Bremskraftsollwert des Antriebsstrangs am Rad inklusive einer regenerativen Bremskraft, die von dem bestehenden Verhältnis zwischen dem Drücken des Bremspedals und der an die Räder durch die Hauptbremsen des Fahrzeugs angelegten Bremskraft unabhängig ist, berechnet werden, wobei der Bremssollwert des Antriebsstrangs am Rad (Fr_cons_brake) durch folgendes Verhältnis definiert ist:

$$\texttt{Fr\_cons\_brake = \quad Fr\_min\_0 \quad + \quad } \beta\texttt{(brake\_pdl)*}$$
$$\texttt{(Fr\_min\_1-Fr\_min\_0)}$$

wobei:

- Fr_min_0 die Mindestkraft ist, die von dem Antriebsstrang beim Anheben eines Fußes gefordert werden kann,
- *Fr_min_1 das Höchstniveau im Absolutwert der regenerativen Bremsung ist, und*
- $\beta$ eine Funktion der Position des Bremspedals ist, definiert vom Intervall [0; 100] bis zum Intervall [0; 1],

**dadurch gekennzeichnet, dass**:
die Funktion geeicht ist, um auf Niveau 1 aus einer Zwischenposition des Pedals heraus zu sättigen, um über die Gesamtheit der gestatteten regenerativen Bremsung über ein gewisses Versenken des Bremspedals hinaus zu verfügen.

2. Verfahren zur Steuerung einer regenerativen Bremsung nach Anspruch 1, **dadurch gekennzeichnet, dass** sich die zusätzliche Bremskraft, die von den Elektromotoren als regenerative Bremsung geliefert wird, einfach zu der durch die Hauptbremsen des Fahrzeugs angewandten Bremskraft hinzufügt.

3. Verfahren zur Steuerung einer regenerativen Bremsung nach Anspruch 1 oder 2, **dadurch gekennzeichnet, dass** die Mindestkraft (Fr_min_0) möglichst nahe der Bremse des Verbrennungsmotors definiert ist.

4. Verfahren zur Steuerung einer regenerativen Bremsung nach Anspruch 1, 2 oder 3, **dadurch gekennzeichnet, dass** das Höchstniveau der regenerativen Bremsung (Fr_min_1) auf ein derartiges Niveau begrenzt ist, dass der Fahrer nicht den Eindruck hat, einen Bremsausfass bei seiner Abwesenheit zu haben.

5. Verfahren zur Steuerung einer regenerativen Bremsung nach einem der vorhergehenden Ansprüche, **dadurch gekennzeichnet, dass** ein Kraftsollwert des Antriebsstrangs an den Rädern Fr_cons (accel_pdl, brake_pdl) in Abhängigkeit von der Position eines Gas- und Bremspedals oder eines Bremspedals nach einem Verhältnis folgenden Typs berechnet wird:

$$Fr\_cons \ (accel\_pdl, \ brake\_pdl) \ = \ Fr\_min\_0 \ + \ \alpha(accel\_pdl)*(Fr\_max \ - \ Fr\_min\_0) \ + \ \beta(brake\_pdl)*(Fr\_min\_1 \ - \ Fr\_min\_0)$$

wobei:

- Fr_max der maximalen Hülle der Kräfte entspricht, die vom Antriebsstrang gefordert werden kann,
- $\alpha$ eine Funktion des Gaspedals ist, definiert vom Intervall [0; 100] bis zum Intervall [0; 1],
- *der Parameter* $\beta$(brake_pdl) von einem Notbremsungsindikator ($\delta$) zwischen 0 und 1 abhängt.

6. Verfahren zur Steuerung einer regenerativen Bremsung nach Anspruch 5, **dadurch gekennzeichnet, dass** der Parameter $\beta$(brake_pdl) sowohl von der Position des Bremspedals (brake_pdl) als auch vom Notbremsungsindikator ($\delta$) abhängig ist.

## Claims

1. Method for controlling the regenerative braking of a vehicle equipped with a combustion engine and with at least one electric motor or with at least one electric motor, in which there is calculated a setpoint for the braking force applied by the power train to the wheel, including the regenerative braking effort, which setpoint is independent of the relationship there is between the degree to which the brake pedal is depressed and the braking effort applied to the wheels by the main brakes of the vehicle, in which the power train wheel braking setpoint (Fr_cons_brake) is defined by the relationship:

$$Fr\_cons\_brake = Fr\_min\_0 + \beta(brake\_pdl)*(Fr\_min\_1 - Fr\_min\_0),$$

where:

- Fr_min_0 is the minimum effort that can be required of the power train with the foot off,
- Fr_min_1 is the maximum level, in terms of absolute value, of the regenerative braking, and
- $\beta$ is a function of the position of the brake pedal, defined from the range [0; 100] to the range [0; 1], **characterized in that**

the function is weighted so as to saturate at the level 1, starting out from an intermediate pedal position, so that all of the authorized regenerative braking becomes available once the brake pedal has been depressed beyond a certain point.

2. Method of controlling regenerative braking according to Claim 1, **characterized in that** the additional braking effort supplied by the electric motors by way of regenerative braking is simply added to the braking effort applied by the main brakes of the vehicle.

3. Method of controlling regenerative braking according to Claim 1 or 2, **characterized in that** the minimal effort (Fr_min_0) is defined as close as possible to the combustion engine braking.

4. Method of controlling regenerative braking according to Claim 1, 2 or 3, **characterized in that** the maximum level of regenerative braking (Fr_min_1) is limited to a level such that the driver does not gain the impression of having defective brakes in the absence thereof.

5. Method of controlling regenerative braking according to one of the preceding claims, **characterized in that** there is calculated a power train wheel force setpoint Fr_cons (accel_pdl, brake_pdl) as a function of the position of the accelerator and braking or braking pedal, using a relationship of the type:

$$Fr\_cons\ (accel\_pdl,\ brake\_pdl)\ =\ Fr\_min\_0\ +$$
$$\alpha(accel\_pdl)*(Fr\_max\ -\ Fr\_min\_0)\ +$$
$$\beta(brake\_pdl)*(Fr\_min\_1\ -\ Fr\_min\_0)$$

where:

- Fr_max corresponds to the maximum envelope of efforts that can be required of the power train,
- $\alpha$ is a function of the accelerator pedal, defined from the range [0; 100] to the range [0; 1],

the parameter $\beta$(brake_pdl) is a function of an emergency braking indicator ($\delta$) lying between 0 and 1.

6. Method of controlling regenerative braking according to Claim 5, **characterized in that** the parameter $\beta$(brake_pdl) is a function both of the position of the brake pedal (brake _pdl) and of the emergency braking indicator ($\delta$).

**Figure 1**

**Figure 2**

EP 2 209 664 B1

**Figure 3**

**Figure 4**

EP 2 209 664 B1

**Figure 5**

EP 2 209 664 B1

**Figure 6**

EP 2 209 664 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2230515
- US 20020030408 A
- JP 2001145205 B
- EP 1136310 A
- US 2007228821 A
- US 6120115 A
- US 6459980 B